(19) Europäisches Patentamt
European Patent Office
Office européen des brevets

(11) Publication number: 0 024 435 B2

(12) NEW EUROPEAN PATENT SPECIFICATION

(45) Date of publication of the new patent specification: 08.02.89

(51) Int. Cl.$^4$: B 23 K 9/16, B 23 K 35/24

(21) Application number: 80900426.0

(22) Date of filing: 21.02.80

(86) International application number: PCT/JP80/00024

(87) International publication number: WO 80/01770 04.09.80 Gazette 80/20

# (54) MIG ARC WELDING METHOD.

(30) Priority: 23.02.79 JP 20577/79

(43) Date of publication of application: 11.03.81 Bulletin 81/10

(45) Publication of the grant of the patent: 20.06.84 Bulletin 84/25

(45) Mention of the opposition decision: 08.02.89 Bulletin 89/06

(84) Designated Contracting States: DE FR GB

(56) References cited:
BE-A- 685 622
DE-A-2 537 157
JP-B-51 033 063
US-A-1 352 534
US-A-3 539 764

The file contains technical information submitted after the application was filed and not included in this specification

(73) Proprietor: KAWASAKI STEEL CORPORATION
No. 1-28, 1-Chome Kitahonmachi-Dori
Fukiai-Ku Kobe-Shi Hyogo 651 (JP)

(72) Inventor: AGUSA, Kazuo
1351, Sonno-cho Chiba-shi
Chiba 281 (JP)
Inventor: NISHIYAMA, Noboru
629-19, Minami Iwasaki Ichihara-shi
Chiba 290-03 (JP)

(74) Representative: Dew, Melvyn John et al
Haseltine Lake & Co Hazlitt House 28
Southampton Buildings Chancery Lane
London WC2A 1AT (GB)

(56) References cited:
SANDVIK 253 MA Steel catalogue 1,743E

SANDVIK Welding Consumables Steel catalogue 2,36E

SANDVIK Welding Handbook Publication 0,34E

EP 0 024 435 B2

Courier Press, Leamington Spa, England.

## Description

Technical Field

The present invnetion relates to MIG arc welding and is concerned with a novel welding technique which improves the arc stability and the transfer of the molten droplets of the welding wire whereby MIG arc welding can be carried out with direct current reverse polarity in a pure inert gas atmosphere, with direct current straight polarity, or with alternating current.

Background Art

In general, MIG arc welding heretofore has used a mixed gas containing an appropriate amount (usually several %) of an active gas, such as oxygen or carbon dioxide gas, in an inert gas, such as argon gas in order to stabilize the arc, and a positive electrode system, that is direct current reverse polarity wherein a welding torch is connected to a positive electrode of a direct current power supply and the mother metal to be welded is connected to a negative electrode.

The reasons why the above described active gas component should be mixed in the shield gas are as follows. Firstly, if a pure inert gas atmosphere i.e. one with no active gas component is used, arc roots (cathode spots) do not take fixed positions on the mother metal to be welded and move around on the mother metal surface sputtering from mill scales present on the surface so that the arc trembles and the welding wire is irregularly fused and therefore a satisfactory welding result can be obtained. Secondly, in the welded metal obtained with a pure inert gas atmosphere, a finger-shape weld penetration is formed at the bottom of a weld puddle and at this portion, insufficient fusion, slag inclusion, blow holes and other welding defects are caused and the addition of an active gas component prevents these defects.

In view of the need for the welded joints to be safe, the above described defects cannot be accepted. Hence, in order to obtain sound welded joints having no such defects. It has been essential to add an appropriate amount of active gas to the inert gas to stabilize the arc and prevent the defects.

The mixing ratio of the active gas is not always constant depending upon the object of welding and the kind of welding wire and mother metal to be welded but, for example, it is well known that Sigma grade argon (Linde Co. Ltd. U.S.A.) containing 1~5% of oxygen in argon gas is effective to transfer the molten droplets at the wire tip in spray form.

Thus, the mixing of the above described active gas with the inert gas is effective for stabilizing the welding arc and preventing the welding defects. However, the oxygen content in the welded metal is inevitably increased and, for example, when welding 9% Ni steel requiring high toughness of an ultra low temperature of about −196°C by using a wire having a similar composition to the mother metal (ferritic wire), this increase in oxygen content is incompatible with the toughness requirement. Thus the presence of the active gas is not acceptable when welding where toughness is particularly important.

As mentioned above, prior MIG arc welding has practically always used direct current reverse polarity, becuase this enables the molten droplets of the wire to be smoothly transferred to the mother metal to be welded and a good welded bead to be formed. When direct current straight polarity is used wherein the welding torch is connected to a negative electrode of the direct current power supply and the mother metal to be welded is connected to a positive electrode, a strong arc force acts against the molten droplets of the wire to push up the molten droplets. Thus the molten droplets are transferred to the mother metal in such a form that they are torn off and result in large splatters whereby the formation of practically usable beads is substantially impossible.

In alternating current MIG arc welding wherein the polarity is periodically alternated, the molten droplets are unstably transferred in the half wave wherein the polarity becomes straight polarity and hence the formation of a good bead is hampered. Further when the current value becomes zero at the alternating points, where the arc is suppressed, a high voltage of about 300 V is necessary to reignite the arc and a large capacity welding power supply is needed. In such a case, if the welding operator receives an electric shock the danger is high. Thus, the use of such a high voltage power supply is not preferred in practice.

For the above described reasons, MIG arc welding using direct current straight polarity or alternating current has never been practised commercially.

In US—A—3 539 764 there is described an MIG arc welding technique wherein two electric power sources are used to control the arc voltage. One of these sources is a conventional electric power source arranged to apply a low direct voltage between the welding wire and the metal to be welded. The other is a pulse generator adapted to produce pulses of direct welding current at a predetermined frequency across the gap between the welding wire and the metal to be welded. The power sources are arranged so that a high voltage pulse is applied between the welding wire and the metal to be welded so that a molten metal drop is formed at the welding wire tip and then the wire and the metal to be welded are short-circuited at low voltage to transfer the molten metal drop. The arc is surrounded by a gaseous atmosphere which may include an inert gas.

In US—A—1 352 534 there is described welding wires containing zirconium or a rare earth metal for use in either electric or gaseous welding operations. The purpose of this addition is to avoid the formation of oxides and nitrides in the weld metal.

The present invention aims to provide a MIG arc welding method using a pure inert gas atmosphere in which the welding arc is stabilized and the molten droplets of the wire are smoothly transferred to the molten pool on the mother meal, with direct current reverse polarity, direct current straight polarity, and alternating current.

Disclosure of Invention

The inventors have carried out a variety of experiments in order to prevent the irregular movement of the cathode spots with direct current reverse polarity and found that it is necessary to transfer the molten droplets at the wire tip by means of instantaneous short-circuits between the wire tip and the surface of the molten pool.

However, with welding wires having normal chemical compositions, it is generally difficult to stably maintain the above described instantaneous short-circuits in pure argon gas atmosphere; either the wire thrusts into the molten pool to form spatters or an unstable spray arc accompanied by an irregular motion of cathode spots is formed.

The inventors have found after a large number of trials and errors that it is effective to include not less than 0.02 weight % of rare earth element in the welding wire for causing instantaneous repetition of the stable short-circuit between the molten droplets at the wire tip and the molten pool surface. By the term "rare earth element" there is meant an element of the lanthanoid series having an atomic number of from 57 to 71.

When such a welding wire is used together with pure argon gas, which is a typical example of pure inert shielding gas, the wire tip is sharpened by the arc when using direct current reverse polarity to form a reverse conical shape having a sharp vertex angle and the sharpened wire tip is instantaneously short-circuited with the molten pool surface stably, repeatedly and continuously. When the amount of rare earth elements present is less than 0.02% in weight, the above described sharpening and the stable metal transfer based on the instantaneous short-circuit do not occur. When said amount exceeds 0.30% in weight, non-metallic inclusions in the welded metal are increased resulting in deterioration of the toughness. Thus the rare earth should be present in the range of from 0.02 to 0.30% by weight.

Thus, according to the present invention, which in its broadest scope is defined by the method of claim 1, MIG arc welding can be stably carried out with direct current reverse polarity, straight polarity or alternating current in a pure inert gas atmosphere. In any case, it is not necessary to add active gas, such as oxygen, carbon dioxide gas and the like to an inert gas for the stabilisation of the arc, whereby the amount of oxygen in the welded metal is decreased and the toughness is conspicuously improved and welding defects are not caused.

Brief Explanation of Drawings

Figure 1 is a graph of arc voltage against welding current; and

Figure 2 is a schematic illustration of metal transfer and the arc configuration when an alternating current is applied in a welding method according to the present invention.

Best Mode of Carrying out the Invention

By using a welding wire containing an appropriate amount of rare earth elements, pure argon shielding gas and an ordinary welding power supply, tests were carried out to determine stable operation ranges with respect to the relationship between the welding current and the arc voltage for maintaining instantaneous short-circuit transfer and satisfactory welded bead. The zone defined by solid lines α in Fig. 1 represents the stable operation range when using reverse polarity. The wire used was one containing 0.10% of rare earth elements and having a diameter of 1.2 mm. Although the above described conditions vary to some extent depending upon the wire diameter and the current value, in the zone below the lower solid line in Figure 1, the wire thrusts into the molten pool, while in the zone above the upper solid line, the arc becomes unstable. The range defined by the upper and lower solid lines, wherein the molten droplets are stably transferred through instantaneous short-circuits, is extended as shown in Fig. 1 by the inclusion of rare earth elements in the wire. The situation is very different in the case of pure argon shielded conventional MIG arc welding using direct current reverse polarity wherein the wire thrusts suddenly into the molten pool as the arc voltage is lowered from the value at which an irregular spray arc is formed.

The addition of rare earth elements shows a noticeable contribution to the above described arc stabilization when present in an amount of more than 0.02% in weight, but when said amount exceeds 0.30% in weight, non-metallic inclusions in the welded metal are increased and the toughness is deteriorated. Thus the amount of rare earth addition should be from 0.02 to 0.30% in weight.

The addition of rare earth element is preferably made in the form of Mischmetal which consists of about 50% Ce and 25% La. In this case it is convenient to define the total rare earth element content of the welding wire by determining the cerium content and multiplying this value by a factor of two.

When a welding wire including an appropriate amount of rare earth element as mentioned above is applied to MIG arc welding with direct current straight polarity, it has been found that the great problem which ordinarily arises when using a welding wire having a prior normal composition (that is, the problem of the molten droplets at the wire tip melted by the arc heat being pushed up by a strong arc force to form a large lump and being not smoothly transferred to the mother metal) is advantageously overcome and the molten droplets are smoothly transferred by the instantaneous short-circuits. In addition, it has been found that the welding conditions causing such a specific transfer of the molten droplets are within the range defined by the upper and lower broken lines β in Fig. 1. The critical value of the amount of rare earth element added, which suppresses the growth of the molten droplets at the wire tip and causes the smooth transfer based on instantaneous short-circuits, is the same as that with direct current reverse polarity.

In alternating current MIG arc welding, in which the straight polarity and the reverse polarity are periodically alternated, the welding phenomena are understood to be a combination of the straight polarity phenomena and the reverse polarity phenomena but, as already mentioned, the arc is suppressed at the alternating points between the two polarities, so that a very high voltage is necessary for reigniting the arc. However, it has been found that the use of welding wire including from 0.02 to 0.30% by weight of rare earth elements can considerably reduce the above described reignition voltage and the molten droplets at the wire tip are transferred to the molten pool by the instantaneous short-circuits, whereby the stabilization of alternating current MIG arc welding can be advantageously attained. In this case, the preferred range of the welding voltage and curent is the zone between the upper solid line α and the lower broken line β.

When the content of rare earth element is less than 0.02% by weight, the arc and the metal transfer are not stabilized in direct current welding, and it is impossible to reduce reignition voltage in alternating current welding. On the other hand, when the content exceeds 0.30% by weight, non-metallic inclusions in the welded metal are increased and the toughness deteriorates. When welding is carried out conforming to the various conditions of the present invention, the resulting weld quality has nothing to do with the basic chemistry of the welding wires used, and the effect of the present invention can be developed with any kind of usually used wires. The term "usually used wires" used herein means usual steel wires having the basic compositions of C≤0.20% by weight, Si≤1.00% by weight, Mn≤2.50%, by weight, and P and S≤0.030% by weight or alloy steel wires containing at least one of Ni≤20% by weight, Cr≤30% by weight and Mo≤10% by weight in addition to the above described components.

Explanation will be made hereinafter with respect to examples wherein the welding was carried out according to the present invention using six kinds of wires containing 0~0.36% by weight of rare earth elements. The steel plates used in the test were mild steel plates having a thickness of 20 mm, and mill scales on the plate surfaces were completely removed prior to welding. The welding rate and the flow rate of shield gas were held constant at 60 cm/min and 40 l/min, respectively.

TABLE 1

(% by weight,
wire diameter 1.2 mm)

| Wire No. | C | Si | Mn | P | S | Total RE |
|---|---|---|---|---|---|---|
| 1 | 0.07 | 0.68 | 1.31 | 0.010 | 0.007 | — |
| 2 | 0.06 | 0.70 | 1.25 | 0.008 | 0.007 | 0.02 |
| 3 | 0.06 | 0.65 | 1.28 | 0.005 | 0.005 | 0.10 |
| 4 | 0.05 | 0.64 | 1.30 | 0.006 | 0.006 | 0.20 |
| 5 | 0.06 | 0.67 | 1.28 | 0.006 | 0.005 | 0.30 |
| 6 | 0.05 | 0.67 | 1.30 | 0.006 | 0.006 | 0.36 |

Note: RE: Mischmetal was used.
Total RE is shown by an amount of 2 times of the analyzed Ce value.

Tables 2*a* and 2*b* show examples of welding carried out by using direct current reverse polarity in a pure argon shield.

TABLE 2(a)

| Wire No. | Content of rare earth element (wt.%) | Welding conditions set | | Welding conditions measured | | Arc phenomena, metal transfer phenomena, and other matters | Judgement of welding result |
|---|---|---|---|---|---|---|---|
| | | Feeding rate of wire (m/min) | Arc voltage (V) | Welding current (A) | Arc voltage (V) | | |
| 1 | — | | | 220 | 34.0 | Wire thrust. Unstable arc. Conspicuous spatter. Set conditions cannot be represented. | × |
| 2 | 0.02 | | | 340 | 25.0 | Instantaneous short-circuit. Stable arc. | ○ |
| 3 | 0.10 | 10 | 25.0 | 340 | 25.0 | Ditto | ○ |
| 4 | 0.20 | | | 340 | 25.0 | Ditto | ○ |
| 5 | 0.30 | | | 340 | 25.0 | Ditto | ○ |
| 6 | 0.36 | | | 340 | 25.0 | Ditto. But cleanliness of welded metal is poor. Toughness is deteriorated. | × |

TABLE 2(b)

| Wire No. | | Content of rare earth element (wt.%) | Welding conditions set | | Welding conditions measured | | Arc phenomena, metal transfer phenomena, and other matters | Judgement of welding result |
|---|---|---|---|---|---|---|---|---|
| | | | Feeding rate of wire (m/min) | Arc voltage (V) | Welding current (A) | Arc voltage (V) | | |
| 3 | a | 0.10 | 10 | 17.5 | 300 | 17.5 | Wire thrust. Conspicuous spatter. | × |
| | b | | | 22.5 | 330 | 22.5 | Instantaneous short-circuit. Stable arc. | O |
| | c | | | 32.5 | 370 | 32.5 | Spray transfer. Wire tip trembles. Cathode spots tremble. Zigzag bead. | × |

With the wire (No. 1) containing no rare earth element, the wire tip thrusted into the molten pool and conspicuous spatters occurred. From the observation of the arc voltage wave form, many interruptions of the arc because of the wire thrusting (that is the occurrence of no load voltage) were found and as a result, a higher arc voltage than the set value was measured as seen in Table 2. In order to avoid the wire thrusting phenomenon, welding was attempted by gradually increasing the set arc voltage. At arc voltage values higher than a certain critical voltage, the wire thrusting phenomenon was solved but the wire tip unstably trembled in spray form and it was impossible to find a stable zone for instantaneous short-circuits.

When the welding was carried out by using the wires (Nos. 2~5) containing 0.02~0.30% by weight of rare earth elements, the molten droplets were stably transferred by the instantaneous short-circuits and very good welds were obtained. The measured welding conditions were roughly equal to the set values.

When the amount of rare earth elements added was increased to 0.36% by weight (wire No. 6), the welding arc itself was stable and the appearance of the welded bead was good, but the cleanliness of the welded metal was considerably deteriorated and, as a result, the toughness of the welded metal was degenerated. In the examples wherein the arc voltage was varied by using the wire (No. 3) containing 0.10% by weight of rare earth elements, at an arc voltage of 17.5 V, practically usable beads were not obtained because the wire thrusted into the molten pool and therefore spatters occurred. However such an unstable phenomenon that the set conditions could not be represented (as was the case with wire No. 1 containing no rare earth element) was not found. When the arc voltage ws 22.5 V, the sharpened wire tip was short-circuited with the molten pool surface in a very stable form to obtain a good welded bead. When the arc voltage was further raised to 32.5 V, the short-circuit at the wire tip was not stably maintained and the wire tip and the cathode spots unstably trembled, so that it was impossible to continue stable welding (the data shown in Table 1 complies with the phenomenon with direct current reverse polarity in Tables 2*a* and 2*b*).

The following Tables 3*a* and 3*b* show welding examples when direct current straight polarity was used in a pure argon shield gas.

TABLE 3(a)

| Wire No. | Content of rare earth element (wt.%) | Welding conditions set | | Welding conditions measured | | Arc phenomena, metal transfer phenomena, and other matters | Judgement of welding result |
|---|---|---|---|---|---|---|---|
| | | Feeding rate of wire (m/min) | Arc voltage (V) | Welding current (A) | Arc voltage (V) | | |
| 1 | — | 10 | 25.0 | 160 | 40.0 | A large lump of molten metal is formed at the wire tip and is not transferred smoothly to mother metal. Very unstable arc. | × |
| 2 | 0.02 | | | 315 | 25.0 | Instantaneous short-circuit. Stable arc. | O |
| 3 | 0.10 | | | 315 | 25.0 | Ditto | O |
| 4 | 0.20 | | | 315 | 25.0 | Ditto | O |
| 5 | 0.30 | | | 315 | 25.0 | Ditto | O |
| 6 | 0.36 | | | 315 | 25.0 | Ditto. But cleanliness of welded metal is poor. Toughness is deteriorated. | × |

TABLE 3(b)

| Wire No. | | Content of rare earth element (wt.%) | Welding conditions set | | Welding conditions measured | | Arc phenomena, metal transfer phenomena, and other matters | Judgement of welding result |
|---|---|---|---|---|---|---|---|---|
| | | | Feeding rate of wire (m/min) | Arc voltage (V) | Welding current (A) | Arc voltage (V) | | |
| 3 | a | 0.10 | 10 | 20.0 | 290 | 20.0 | Wire thrust. Conspicuous spatter. | × |
| | b | | | 27.5 | 320 | 27.5 | Instantaneous short-circuit. Stable arc. | O |
| | c | | | 35.0 | 345 | 35.0 | Small grained molten droplets scatter in all directions. Uniform beads are not formed. | × |

When the wire (No. 1) containing no rare earth elements was used, it was difficult to transfer the molten droplets to the mother metal because of the strong arc force and hence the molten droplets grew to form a large lump at the wire tip and scattered irregularly. Further the arc itself was very unstable and it was difficult to represent the set conditions. When the wires (Nos. 2~5) containing rare earth elements within the range of 0.02~0.30% by weight were used, the arc force was weakened due to the stabilizing effect of the rare earth elements on cathode spots and the molten droplets at the wire tip were smoothly transferred accompanying the instantaneous short-circuit to obtain a very stabilized bead. However, when the amount of rare earth elements added was increased to 0.36% by weight, although the stability of the arc itself and the appearance of the bead were good, a large amount of non-metallic inclusions were included in the welded metal and the toughness of the welded metal was deteriorated.

When the arc voltage was varied by using the wire (No. 3) containing 0.10% by weight of rare earth elements, in the case of 20.0 V, the wire thrusted into the molten pool and in the case of 35.0 V, small grains of molten droplets were transferred in a form such that they scattered in all directions so that practically usable beads were not obtained. However, at the intermediate voltage of 27.5 V, the instantaneous short-circuit was stably maintained and a very good welded bead was obtained (the data in Table 3 corresponds to the phenomenon of direct current straight polarity in Fig. 1).

The following Tables 4*a* and 4*b* show examples when the welding was carried out using alternating current in a pure argon shield.

TABLE 4(a)

| Shield gas | Wire No. | Content of rare earth element (wt.%) | Welding conditions set | | Welding conditions measured | | Arc phenomena, metal transfer phenomena, and other matters | Judgement of welding result |
|---|---|---|---|---|---|---|---|---|
| | | | Feeding rate of wire (m/min) | Arc voltage (V) | Welding current (A) | Arc voltage (V) | | |
| | 1 | — | | | — | — | Arc reignition is impossible. Welding is impossible. | × |
| | 2 | 0.02 | | | 345 | 26.0 | Instantaneous short-circuit. Reignition voltage is low. Stable arc. | O |
| Pure argon | 3 | 0.10 | 10.8 | 26.0 | 345 | 26.0 | Ditto | O |
| | 4 | 0.20 | | | 345 | 26.0 | Ditto | O |
| | 5 | 0.30 | | | 345 | 26.0 | Ditto | O |
| | 6 | 0.36 | | | 345 | 26.0 | Ditto. But cleanliness of welded metal is poor and toughness is deteriorated. | × |

TABLE 4(b)

| Shield gas | Wire No. | | Content of rare earth element (wt.%) | Welding conditions set | | Welding conditions measured | | Arc phenomena, metal transfer phenomena, and other matters | Judgement of welding result |
|---|---|---|---|---|---|---|---|---|---|
| | | | | Feeding rate of wire (m/min) | Arc voltage (V) | Welding current (A) | Arc voltage (V) | | |
| Pure argon | 3 | a | 0.10 | 10.8 | 20.0 | 300 | 20.0 | Wire thrust. Unstable arc. Conspicuous spatter. | × |
| | | b | | | 25.0 | 340 | 25.0 | Instantaneous short-circuit. Reignition voltage is low. Stable arc. | O |
| | | c | | | 35.0 | 400 | 35.0 | Wire tip trembles. Unstable arc. Zigzag bead. | × |

From these examples, it can be understood that the addition of rare earth elements in the claimed quantities is effective for stabilizing alternating current MIG arcs.

The features of the alternating current arc are that, when the wire (No. 1) containing no rare earth elements was used, the reignition of the arc was not stably conducted, so that continuation of welding was quite impossible. However, when the wires (Nos. 2~5) containing 0.02 to 0.30% by weight of rare earth elements were used, the arcs in both the negative and the positive half wave zones were stabilized and also the reignition characteristics at the alternating points were stabilized. Welds of very high quality were obtained. When the content of rare earth elements was increased to 0.36% in weight, the cleanliness of the welded metal was deteriorated and such welding was not practical.

When welding was carried out by varying arc voltage using the wire (No. 3) containing 0.1% by weight of rare earth elements, the arc voltage of 20.0 V was too low to prevent the wire thrusting into the molten pool and a good welded bead was not obtained. An arc voltage of 35.0 V was too high to maintain the instantaneous short-circuit and the wire tip trembled, so that a good welded bead was not obtained. In contrast to these, the intermediate voltage of 25.0 V stably maintained the instantaneous short-circuit and a good welded bead was obtained.

Figure 2 is a schematic illustration of the metal transfer phenomena and the arc behaviour during one cycle of alternating current MIG arc welding in pure argon gas.

In Figure 2, s represents the welding current wave shape, w is a welding wire containing an appropriate amount of rare earth elements, p is a molten pool surface formed on a mother metal to be welded, zones c and f indicated by broken lines are primary and secondary arcs respectively, d is a molten droplet formed at the welding wire tip by the arc heat, and t is a wire tip causing instantaneous short-circuit.

The numbers in Figure 2 correspond to successive instants along the time axis of the welding current wave s and show the relationship of arc behaviour and metal transfer to current variation. Furthermore, 1', 2', and 15' show an embodiment of a state different to that of 1, 2 and 15, respectively.

The left half in Figure 2 shows the reverse polarity half wave and at the beginning of the said zone 1~4, the tip of wire w is melted by the arc heat and a molten droplet d transfers to the molten pool hanging from the partly sharpened wire tip. After the metal transfer the tip of the wire w is fully sharpened at the time point 5. Thus in the last period 5 to 7 in the above described half wave zone, the sharpened tip touches the surface of the molten pool and maintains stable instantaneous short-circuits. Almost all the molten metal is transferred to the mother plate through these instantaneous short-circuits having a frequency of about 250 Hz.

When the present invention is applied to alternating current MIG arc welding, the major part of the metal transfer occurs during the last half of the reverse polarity period. Little transfer to molten droplets occurs during the straight polarity period.

At the time point 8 where the polarity is alternated from reverse polarity to straight polarity, the arcs c and f disappear and at this instant the sharpened tip of wire w remains. At the time point 9 immediately after having entered the straight polarity, the arc f is reignited at the root of the sharpened tip m which is subsequently fused down. Thereafter, there is no noticeable variation in welding phenomena along the time points 10~13 and the molten droplet d accumulated at the tip of the wire w during the last half of the straight polarity is either transferred to the mother metal at the time point 14 or is retained without transferring. After the time point 15 or 15' as the case may be (that is, during the next reverse polarity period) the already mentioned events occur (points 1, 2 etc.) or the molten drop (1') is transferred at time point 2' and then the aforementioned events occur (points 3, 4 etc.).

In the MIG arc welding using direct current reverse polarity, the instantaneous short-circuit transfer as shown at time points 5~7 in Figure 2 is continued, while in the case of direct current straight polarity, the instantaneous short-circuit transfer as shown at time point 14 in Figure 2 is stably continued at a frequency of about 60 Hz.

In the above described examples, the effect of the present invention has been explained with respect to test specimens of mild steel, but the present invention can also be advantageously applied to the welding of all alloy steels, such as 9% Ni as mentioned hereinbefore and in this case substantially the same effect can be obtained.

Industrial Applicability

By applying the method of the invention to alternating current MIG arc welding, welding can be satisfactorily carried out using an alternating current supply for manual metal arc welding which is a cheap welding power supply. It is not necessary to install an expensive direct current welding power supply. Also, in alternating current MIG arc welding, the current flows pulsatory, so that the alternating current MIG arc is hardly subjected to the adverse influence of external magnetic fields (for example, residual magnetism of the mother metal) as is the case with direct current arcs and the problem of magnetic arc blow can be solved. Further the reignition voltage is low, so that the weldig arc can be stabilized even with a low no-load voltage of the power supply. Accordingly, no specific apparatus is needed to stabilise the reignition characteristics and the danger of electric shock can be minimized.

## Claims

1. A MIG welding method wherein a welding wire is melted by the heat of an arc shielded by an atmosphere comprising an inert gas, characterised in that the atmosphere consists of pure inert gas and in that the welding wire includes, in percent by weight, from 0.02 to 0.30% rare earth element, ≤0.20% carbon, ≤1.00% silicon, ≤2.50% manganese, P and S each ≤0.030%, with or without one or more of nickel, chromium and molybdenum in an amount not exceeding 20% nickel, 30% chromium and 10% molybdenum, the balance being iron, the welding parameters being such that molten droplets formed at the tip of the welding wire are transferred to the surface of a molten metal pool on the mother metal being welded by instantaneous short-circuits between the wire tip and the molten metal pool surface.

2. The method as claimed in claim 1 wherein the rare earth element is in the form of Mischmetal.

3. The method as claimed in claim 1 or 2, wherein the polarity of the arc is direct current reverse polarity.

4. The method as claimed in claim 1 or 2, wherein the polarity of the arc is direct current straight polarity.

5. The method as claimed in claim 1 or 2, wherein the welding current is alternating current.

## Patentansprüche

1. Verfahren zum MIG-Schweißen, bei welchem ein Schweißdraht durch Einwirkung der Wärme eines Lichtbogens in einer ein inertes Gas enthaltenden Atmosphäre geschmolzen wird, dadurch gekennzeichnet, daß die Atmosphäre aus reinem, inerten Gas besteht, und daß der Schweißdraht, in Gewichtsprozenten ausgedrückt, 0.02% bis 0.3% seltene Erden, nicht mehr als 0.2% Kohlenstoff, nicht mehr als 1.0% Silizium, nicht mehr als 2.5% Mangan, nicht mehr als 0.03% Phosphor und nicht mehr als 0.03% Schwefel enthält, mit oder ohne einen oder mehrere der Bestandteile Nickel, Chrom und Molybdän im Ausmaß von nicht mehr als 20% Nickel, 30% Chrom und 10% Molybdän, wobei der restliche Bestandteil Eisen ist, und wobei die Schweißparameter derart gewählt werden, daß geschmolzene, an der Elektrodenspitze gebildete Tröpfchen auf die Oberfläche eines geschmolzenen Bereiches des zu schweißenden Grundmaterials gelangen, das durch gleichzeitige Kurzschlüsse zwischen der Elektrodenspitze und diesem Bereich verschweißt wird.

2. Verfahren nach Anspruch 1, dadurch gekennzeichnet, daß die seltenen Erden in Form eines Mischmetalls vorliegen.

3. Verfahren nach Anspruch 1 oder 2, dadurch gekennzeichnet, daß die Lichtbogenpolarität eine gegensinnige Gleichstrompolarität ist.

4. Verfahren nach Anspruch 1 oder 2, dadurch gekennzeichnet, daß die Lichtbogenpolarität eine gleichsinnige Gleichstrom-polarität ist.

5. Verfahren nach Anspruch 1 oder 2, dadurch gekennzeichnet, daß der Schweißstrom ein Wechselstrom ist.

## Revendications

1. Procédé de soudage à l'arc sous gaz mixte dans lequel un fil d'apport est fondu par la chaleur d'un arc protégé par une atmosphère contenant un gaz inerte, caractérisé en ce que l'atmosphère est constituée de gaz inerte pur et en ce que le fil d'apport contient de 0,02 à 0,30% en poids d'un élément de terre rare, au plus 0,20% de carbone, au plus 1,00% de silicium, au plus 2,50% de manganèse, au plus 0,030% respectivement de phosphore et de soufre, avec ou sans un ou plusieurs des éléments "nickel", "chrome" et "molybdène", en une proportion ne dépassant pas 20% de nickel, 30% de chrome et 10% de molybdène, le reste étant du fer, les paramètres de soudage étant tels que les gouttelettes de matières fondues formées à l'extrémité du fil d'apport sont transférées à la surface d'une flaque de métal fondu sur le métal de base, ce dernier étant soudé par courts-circuits instantanés entre l'extrémité du fil et la surface de la flaque de métal fondu.

2. Procédé selon la revendication 1, caractérisé en ce que l'élément de terre rare se trouve sous forme de métaux alliés.

3. Procédé selon la revendication 1 ou la revendication 2, caractérisé en ce que la polarité de l'arc est la polarité inverse du courant continu.

4. Procédé selon la revendication 1 ou la revendication 2, caractérisé en ce que la polarité de l'arc est la polarité normale du courtant continu.

5. Procédé selon la revendication 1 ou la revendication 2, caractérisé en ce que le courant de soudage est un courant alternatif.

FIG_1

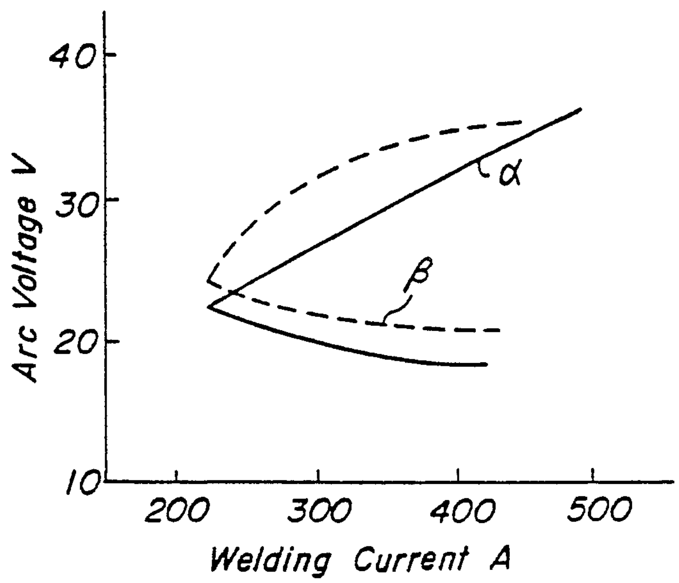

FIG.2

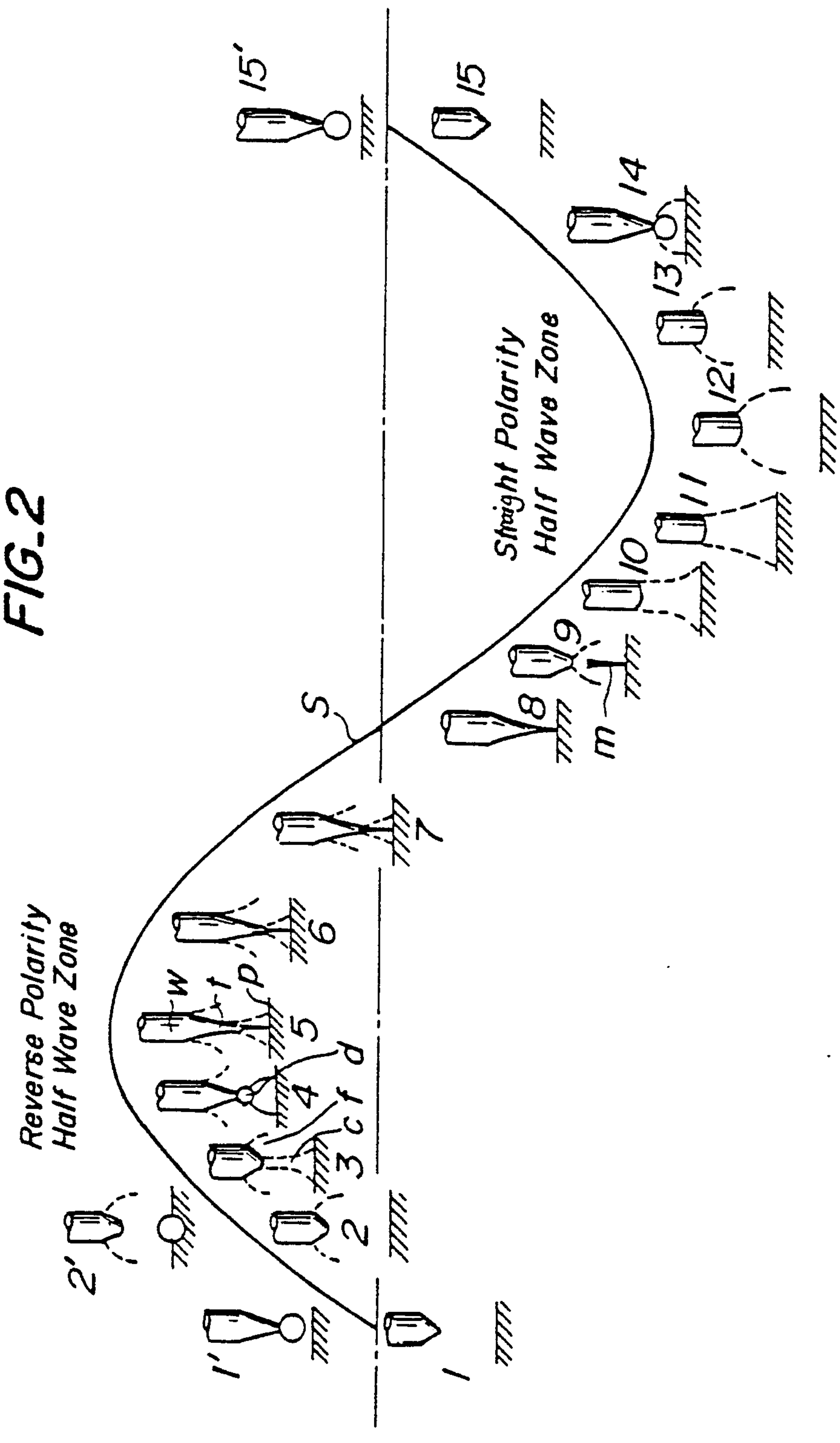
Reverse Polarity
Half Wave Zone
Straight Polarity
Half Wave Zone
S
m
w
t
p
c
f
d
1
1'
2
2'
3
4
5
6
7
8
9
10
11
12
13
14
15
15'